# EUROPÄISCHE PATENTSCHRIFT

(11) **EP 0 635 104 B1**
(45) Veröffentlichungstag und Bekanntmachung des Hinweises auf die Patenterteilung: **18.12.1996**
(21) Anmeldenummer: 94906146.9
(22) Anmeldetag: 26.01.1994
(51) Int. Cl.: F16C 9/04, F16C 33/06

(54) **VERFAHREN ZUM HERSTELLEN EINES BAUTEILS MIT WENIGSTENS EINEM GETEILTEN LAGERSITZ**
PROCESS FOR PRODUCING A COMPONENT HAVING AT LEAST ONE TWO-PIECE BEARING SEAT
PROCEDE POUR FABRIQUER UNE PIECE COMPORTANT AU MOINS UN SIEGE DE PALIER EN DEUX PARTIES

(30) Priorität: 08.02.1993 DE 4303592
(43) Veröffentlichungstag der Anmeldung: 25.01.1995
(73) Patentinhaber: SINTERMETALLWERK KREBSÖGE GMBH, D-42477 Radevormwald (DE)
(72) Erfinder: ARNHOLD, Volker, D-42369 Wuppertal (DE); EILRICH, Uwe, D-51789 Lindlar (DE); NEUBERT, Harald, D-40789 Monheim (DE)
(74) Vertreter: Maxton, Alfred, Dipl.-Ing.
(86) Internationale Anmeldenummer: EP9400199
(87) Internationale Veröffentlichungsnummer: WO9418463

(56) Entgegenhaltungen:
- EP-A- 0 167 320
- EP-A- 0 342 800
- GB-A- 2 245 318
- PATENT ABSTRACTS OF JAPAN vol. 8, no. 168 (C-236) 3. August 1984 & JP,A,59 067 364 (TSUKAMOTO SEIKI K.K.) 17. April 1984
- POWDER METALLURGY, Bd.34, Nr.4, 1991, LONDON, GB Seiten 253 - 258 T. BELL 'Surface treatment and coating of PM components'

## Beschreibung

Die Erfindung betrifft ein Verfahren zum Herstellen eines Bauteils aus einem Formteil, sowie dieses Bauteil, wobei das Bauteil zumindest einen durch einen Lagerdeckel gebildeten, geteilten Lagersitz aufweist, bei welchem Verfahren der Lagerdeckel von dem Formteil abgetrennt wird.

Derartige Bauteile sind beispielsweise als Pleuel mit einem kleinen Pleuelauge, einem großen Pleuelauge und einem Schaft ausgebildet, wobei das große Pleuelauge einen geteilten Lagersitz für die Lagerung des Pleuels an der Kurbelwelle aufweist. Da sich die Erfindung insbesondere auf die Herstellung eines Pleuels bezieht, ist im folgenden überwiegend von einem Pleuel die Rede, ohne daß damit eine Beschränkung verbunden sein soll.

Ein Pleuel wird im allgemeinen dadurch hergestellt, daß zunächst ein Formteil, z. B. durch Schmieden, Gießen oder pulvermetallurgische Verfahren, hergestellt wird, wobei das Innenmaß des großen Pleuelauges im Bereich der zukünftigen Trennstelle ein Aufmaß aufweist. An dieser Stelle wird das große Pleuelauge z. B. durch Sägen getrennt, wodurch das Aufmaß weitgehend beseitigt wird. Die Trennflächen der somit gebildeten Pleuelkappe einerseits und des restlichen Pleuels andererseits werden in einem weiteren Verfahrensschritt paßgenau, z. B. durch Schleifen, bearbeitet. Die Pleuelkappe wird in fertigem Zustand mittels Pleuelschrauben an dem restlichen Pleuel befestigt, wobei die dazu erforderlichen Schraubenlöcher vor oder nach der Trennung gebohrt werden können. In zusammengesetztem Zustand des Pleuel erfolgt anschließend die mechanische Bearbeitung des Lagersitzes zur Aufnahme von Lagerschalenhälften, die zwischen Pleuel und Kurbelwelle unter Bildung eines Gleitlagers angeordnet sind.

Die mechanische Bearbeitung des Lagersitzes umfaßt in der Regel eine Grob- eine Fein- und eine Feinstbearbeitung, durch Drehen, Feindrehen bzw. Honen. Weiterhin müssen im Lagersitz des Pleuelauges Ausnehmungen vorgesehen werden, die mit entsprechenden Nasen der Lagerschalenhälften zusammenwirken, um ein Verdrehen der Lagerschalen während des Betriebes zu vermeiden.

Insbesondere die beiden Lagerschalenhälften müssen mit hoher Präzision hergestellt werden, da zum einen die Innenflächen der Lagerschalenhälften zusammen mit der Kurbelwelle das Gleitlager mit einer dazu erforderlichen Gleitlagerpassung bilden, und zum anderen die äußeren Oberflächen der Lagerschalen dem Lagersitz des großen Pleuelauges des Pleuels angepaßt werden müssen. Um einen sicheren Sitz der Lagerschalenhälften auf dem Lagersitz des Pleuels zu gewährleisten, ist es u. a. erforderlich, daß die Lagerschalenhälften zwischen der Pleuelklappe und dem restlichen Pleuel eingeklemmt werden. Dadurch kann nicht ausgeschlossen werden, daß beim Verschrauben der Pleuelkappe und somit Verspannen der Lagerschalenhälften Verformungen auftreten, die eine Passungsungenauigkeit der inneren Oberfläche der Lagerschalenhälften zur Folge haben.

Trotz sorgfältigster Bearbeitung und hoher Paßgenauigkeit kann nicht immer vermieden werden, daß sich aufgrund der extrem hohen Beanspruchungen eines Pleuels während des Betriebs beispielsweise die Pleuelkappe auf dem restlichen Pleuel verschiebt und somit ein einwandfreier Sitz der Lagerschalenhälften nicht mehr gewährleistet ist. Weiterhin ist es möglich, daß sich die Lagerschalen trotz der Verdrehsicherung verdrehen. Dies führt unweigerlich zur Zerstörung des Gleitlagers und somit zum Ausfall des Motors.

Aus der DE-C-38 06 236 ist ein Pleuel bekannt, dessen Pleuelkappe durch Bruchtrennung vom restlichen Pleuel getrennt wird. Dabei wird als Trennfläche eine Bruchfläche mit großer, unregelmäßiger Oberfläche erzeugt, wodurch ein seitlicher Versatz der Pleuelkappe auf dem restlichen Pleuel nahezu ausgeschlossen ist. Ferner wird damit erreicht, daß nur die von dem Formteil jeweils abgetrennte Pleuelkappe auf dem jeweils restlichen Pleuel befestigt werden kann, da die Bruchoberfläche einzigartig ist, wodurch Verwechslungen von Einzelteilen, z. B. bei der Montage oder Reparatur des Motors, ausgeschlossen werden. Nach wie vor müssen jedoch in ein derartig hergestelltes Pleuel Lagerschalen eingesetzt werden, da der Werkstoff, aus dem das Pleuel gefertigt wird, sich nicht als Gleitlagerwerkstoff eignet. Es besteht daher die Gefahr, daß sich die Lagerschalen in dem Lagersitz trotz der ebenfalls vorzusehenden Verdrehsicherungen mittels Ausnehmungen und Nasen in dem Lagersitz verdrehen und somit einen Ausfall des Motors zur Folge haben.

Der Erfindung liegt die Aufgabe zugrunde, ein Bauteil, beispielsweise ein Pleuel, mit einem geteilten Lagersitz zu schaffen, bei welchem die obengenannten Nachteile weitestgehend vermieden werden.

Die Aufgabe wird gemäß der Erfindung dadurch gelöst, daß eine Lagerschicht aus einem anderen Material als dem des Formteils auf die Lagersitzfläche des Formteils aufgebracht wird und daß zumindest die Lagerschicht durch Bruchtrennung geteilt wird. Dies hat den Vorteil, daß zum einen der Lagerwerkstoff auf die Lagersitzfläche, z. B. des großen Pleuelauges, haftend aufgebracht wird, wodurch eine feste Verbindung zwischen Lagerwerkstoff und Pleuel bewirkt wird. Zum anderen besteht ein Vorteil darin, daß die äußere Oberfläche des Lagersitzes des Pleuels nicht mehr paßgenau mechanisch nachgearbeitet werden muß, da eventuelle Ungenauigkeiten durch den Auftrag der Lagerschicht ausgeglichen werden. Es ist demnach nur noch erforderlich, daß die Innenseite der Lagerschicht mechanisch paßgenau bearbeitet wird. Ein anderer Vorteil ist darin zu sehen, daß nach dem Trennen der Lagerschicht und Wiederzusammensetzen eine nahezu nahtlose Trennfuge erzeugt wird. Die innere Oberfläche, also die Lauffläche der Lagerschicht ist demnach nahezu vollständig eben, wodurch z. B. bei der Ausbildung als Gleitlager, der Aufbau der Schmiermittelschicht zwischen Kurbelwelle einerseits und Lagerschicht andererseits nicht behindert wird. Ferner wird die Schmiermittelschicht durch die nahtlose Trennstelle kaum beeinflußt, wodurch eine hohe Stabilität dieser Schicht gewährleistet und somit eine metallische Berührung der Kurbelwelle und des Pleuels im Betrieb zuverlässig vermieden werden.

In einer zweckmäßigen Ausgestaltung der Erfindung ist vorgesehen, daß der Lagerdeckel von dem Formteil vor der Beschichtung der Lagersitzfläche abgetrennt und lösbar mit diesem wieder zusammengesetzt wird. Vorteilhaft ist es dabei, wenn die Abtrennung des Lagerdeckels ebenfalls durch Bruchtrennung erfolgt. Damit wird beispielsweise bei einem Pleuel gewährleistet, daß zum einen die Pleuelkappe aufgrund der großen Oberfläche der Bruchstelle formschlüssig mit dem restlichen Pleuel verbunden ist und somit ein seitlicher Versatz zwischen diesen Einzelteilen vermieden wird. Nach dem Zusammensetzen der Einzelteile wird das die Lagerschicht bildende Material auf die Lagersitzfläche aufgebracht und das beschichtete Formteil erneut durch Bruch getrennt. Dadurch weisen die gebildeten Bestandteile des Bauteils sowohl an der Lagerschicht als auch an der Trennfläche des Lagerdeckels eine Bruchfläche auf, so daß eine besonders gute Verbindung der Bestandteile ermöglicht wird.

In einer weiteren Ausgestaltung der Erfindung ist vorgesehen, daß die Lagersitzfläche des Formteils zunächst mit dem die Lagerschicht bildenden Material beschichtet wird und anschließend der Lagerdeckel mit dem auf dessen Sitzfläche aufgebrachten Teil der Lagerschicht durch Bruchtrennung von dem Formteil abgetrennt wird. Dies hat den Vorteil, daß der Verfahrensschritt der Bruchtrennung lediglich einmal je Bauteil durchgeführt werden muß.

Bei der Herstellung eines Pleuel kann gemäß der Erfindung im einzelnen so vorgegangen werden, daß das Formteils mittels Ur- oder Umformverfahren hergestellt wird und anschließend die Schraubenlöcher für die Pleuelschrauben in das Formteil gebohrt werden. Danach kann die Pleuelkappe durch Sägen oder durch Bruchtrennung vom restlichen Pleuel abgetrennt werden. In einem weiteren Schritt wird dann die Lagersitzfläche des Formteils entsprechend dem Beschichtungsverfahrens vorbereitet. Dies erfolgt zweckmäßigerweise im zusammengesetzten Zustand des Pleuels. Im Falle der Bruchtrennung der Pleuelkappe von dem restlichen Pleuel wird es erforderlich sein, daß im Bereich der herzustellenden Trennstelle eine Anrißkerbe vorgesehen wird. Dies kann beispielsweise durch mechanische Bearbeitung erfolgen.

Besonders vorteilhaft ist es jedoch, wenn das Formteil durch ein pulvermetallurgisches Verfahren, beispielsweise Sintern, hergestellt wird, da dabei die Anrißkerbe für die Trennstelle bereits beim Fertigen des Formteils vorgesehen werden kann. Dadurch wird eine zusätzliche mechanische Bearbeitung der Lagersitzfläche vermieden.

Besonders vorteilhaft ist es jedoch, wenn das Formteil durch Sinterschmieden hergestellt wird, wobei der vorgeformte Grünling vor dem Sintern im Bereich der Trennstelle mit einer Kerbe versehen wird, die zwischen Sintern und Schmieden eine Schutzschicht, insbesondere eine Oxidschicht erhält und beim anschließenden Schmieden zum Formteil nahezu vollständig geschlossen wird. Die Anrißkerbe ist somit als solche nicht mehr vorhanden, jedoch verhindert die aufgebrachte Schutzschicht eine Verbindung des pulvermetallurgischen Ausgangsmaterials an dieser Stelle. Dies hat den besonderen Vorteil, daß durch das nachträgliche Auftragen der Gleitlagerschicht vor dem Abtrennen der Pleuelkappe von dem restlichen Pleuel kein das die Gleitlagerschicht bildende Material in die Anrißkerbe gelangen kann, wodurch die Bruchtrennung an der gewünschten Trennstelle erschwert werden würde. Die Schutzschicht ist beispielsweise als Oxidschicht ausgebildet, die dadurch hergestellt wird, daß der Formling mit der Kerbe nach dem Sintern durch die Luftatmosphäre zum Schmieden verbracht wird.

Nach der Bruchtrennung der Lagerschicht mit oder nach dem Abtrennen der Pleuelkappe von dem restlichen Pleuel werden die Bestandteile wieder zusammengesetzt und die Innenfläche der Lagerschicht mechanisch entsprechend der gewünschten Passung nachgearbeitet. Damit werden auch bei der Bruchtrennung eventuell auftretende Gratstellen entfernt.

Das erfindungsgemäße Verfahren hat den Vorteil, daß das Material des Formteils einerseits und das Material der Lagerschicht andererseits nach ihren individuellen Anforderungen ausgewählt werden können. So kann beispielsweise das Formteil aus einem der mechanischen Beanspruchung angepaßten Werkstoff, z. B. auf Eisenbasis, bestehen, während die Lagerschicht aus einem üblichen Lagerwerkstoff, z. B. auf Aluminiumbasis, besteht.

Bei der Herstellung des Formteils mittels pulvermetallurgischer Verfahren kann vorgesehen werden, daß das Formteil aus einem fertiglegierten Sinterwerkstoff besteht, der aus (in Gewichtsprozenten):
0,1 bis 0,5% Mn
0,1 bis 2,0% Mo
0,2 bis 2,2% Ni
0,5 bis 2,5% Cu
0,3 bis 1,0% C
Rest: Fe
besteht. Statt dieses fertiglegierten Pulvers kann der Sinterwerkstoff auch aus einem anlegierten Pulver der folgenden Zusammensetzung bestehen (in Gewichtsprozenten) :
0,2 bis 1,5% Mo
1,0 bis 4,0% Ni
1,0 bis 3,0% Cu
0,3 bis 1,0% C
Rest: Fe
Eine weitere Möglichkeit für die Zusammensetzung des Sinterwerkstoffes besteht in einem gemischtlegierten Pulver mit (in Gewichtsprozenten) :
1,0 bis 3,0% Cu
0,3 bis 1,0% C
Rest: Fe
Auch kann als Sinterwerkstoff ein anderes fertiglegiertes Pulver mit (in Gewichtsprozenten):
0,5 bis 3% Mo
0,3 bis 1,0% C
0 bis 3% Cu
Rest: Fe
verwendet werden.

Die Lagerschicht kann beispielsweise folgende Zusammensetzungen aufweisen (in Gewichtsprozenten) :
0,7 bis 1,3% Cu
14,5 bis 22,5% Sn
≤ 0,7% Si
≤ 0,7% Fe
≤ 0,7% Mn
Rest : Al
Ferner besteht die Möglichkeit, daß sich der Lagerwerkstoff aus (in Gewichtsprozenten):
11,0 bis 13,0% Si
0,8 bis 1,5% Cu
≤ 1,3% Ni
0,8 bis 1,3% Mg
≤ 0,7% Fe
≤ 0,3% Mn
≤ 0,3% Zn
≤ 0,2% Ti
Rest : Al
oder aus (in Gewichtsprozenten) :
95 bis 97% Al
3 bis 5% Pb
zusammensetzt.

Selbstverständlich kann die Lagerschicht auch aus einer Legierung auf Kupfer-Basis, beispielsweise aus (in Gewichtsprozenten):
3 bis 10% Sn
10 bis 23% Pb
Rest : Cu
oder (in Gewichtsprozenten):
74% Cu
20% Pb
2% Sn
4% Ni
bestehen. Diese genannten Werkstoffe für das Formteil und die Lagerschicht können zusätzlich die herstellungsbedingten Verunreinigungen aufweisen.

Die Lagerschicht wird gemäß der Erfindung mittels thermischer Spritzverfahren auf die Lagersitzfläche des Formteils aufgebracht. Als thermisches Spritzverfahren kommen dabei insbesondere Flammspritzen, Hochgeschwindigkeitsflammspritzen oder Plasmaspritzen in Betracht. Diese ermöglichen eine besonders gleichmäßige Auftragung des die Lagerschicht bildenden Materials. Ferner ist eine Vorbehandlung der Lagersitzfläche im allgemeinen nicht oder nur in geringem Umfang erforderlich. Insbesondere bei der Anwendung des Plasmaspritzens ist es möglich, daß dem Lagerwerkstoff noch Festschmierstoffe zugegeben werden können, die z. B. nachträglich in den Plasmastrahl eingeführt werden. Als Festschmierstoffe können beispielsweise Graphit, Mangansulfide oder Kalziumfluoride zugesetzt werden.

Je nach Auswahl des Lagerwerkstoffes kann es vorkommen, daß dieser kein ausgeprägtes Sprödbruchverhalten aufweist. Es kann daher zweckmäßig sein, daß zumindest die Lagerschicht im Bereich der Trennstelle durch gezielte Wärmebehandlung, z. B. durch Kühlen, versprödet wird. Um ein ausreichendes Sprödbruchverhalten der gesamten Trennstelle zu erzielen, kann es weiterhin zweckmäßig sein, daß auch das Formteil zumindest im Bereich der Trennstelle durch gezielte Wärmebehandlung, z. B. durch Kühlen, versprödet wird. Das Kühlen an der Trennstelle kann beispielsweise durch partielles Auftragen oder Aufsprühen von einem verflüssigten Gas, z. B. Stickstoff, erfolgen.

Es ist offensichtlich, daß mit diesem erfindungsgemäßen Verfahren beispielsweise ein Pleuel hergestellt werden kann, dessen Lagerschicht fest, insbesondere drehfest mit dem Pleuel verbunden ist. Weiterhin weist die Lauffläche der Lagerschicht nahezu keine Trennfläche auf, die eine Beeinträchtigung z. B. des Schmieröls zwischen Kurbelwelle einerseits und Lauffläche andererseits bewirken könnte. Ferner ist das Pleuel einfach und schnell herzustellen.

Die Erfindung betrifft ferner ein Bauteil aus einem Formteil, wobei das Bauteil zumindest einen durch einen Lagerdeckel gebildeten, geteilten Lagersitz und einen Grundkörper aufweist, dessen Lagersitzfläche mit einer Lagerschicht aus einem anderen Material als dem des Grundkörpers versehen ist und daß die Trennstelle des geteilten Lagersitzes zumindest im Bereich der Lagerschicht eine durch Bruchtrennung erzeugte Bruchfläche aufweist. Dieses Bauteil kann beispielsweise als Pleuel ausgebildet und durch das vorstehend beschriebene Verfahren hergestellt worden sein. In einer vorteilhaften Ausgestaltung des Bauteils weist die Trennstelle zwischen Lagerdeckel und Grundteil ebenfalls eine durch Bruchtrennung erzeugte Bruchfläche auf.

Die Erfindung wird nun anhand des in der Zeichnung dargestellten Pleuels als Ausführungsbeispiels näher erläutert. Es zeigen:
- Fig. 1: eine Ansicht eines Pleuels,
- Fig. 2: einen Schnitt entlang der Linie II-II gemäß Fig. 1,
- Fig. 3: eine Pleuelkappe nach der Bruchtrennung und
- Fig. 4: die Einzelheit IV gemäß Fig. 1.

Das in der Zeichnung dargestellte Pleuel 1 weist ein kleines Pleuelauge 2, einen Schaft 12 und ein großes Pleuelauge 3 auf. Das große Pleuelauge 3 weist einen geteilten Lagersitz (24) auf, dessen Lagersitzfläche 4 mit einer Lagerschicht 15 versehen ist. Die Oberfläche 13 der Lagerschicht 15 bildet die Lauffläche für die Gleitlagerung des Pleuels auf der nicht dargestellten Kurbelwelle.

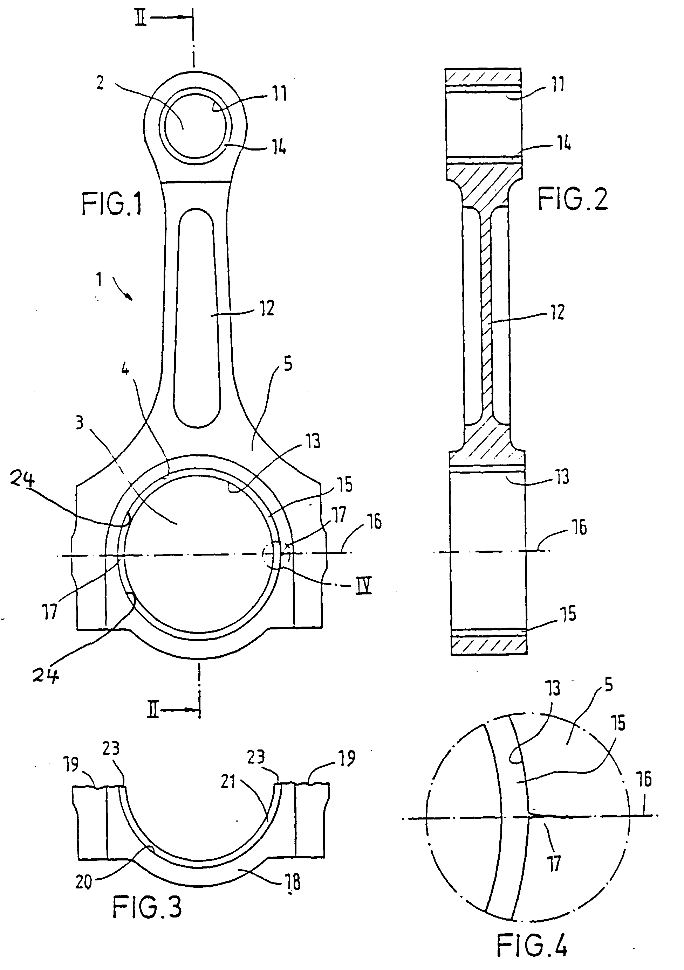

Die Fig. 1 stellt das Pleuel 1 in einem Zustand dar, nach dem die Lagerschicht 15 auf die Lagersitzfläche 4 des Formteils aufgebracht worden ist und die Abtrennung der Pleuelkappe 18 von dem restlichen Pleuel 5 noch nicht erfolgt ist. Zur Abtrennung der Pleuelkappe 18 entlang der Trennebene 16 weist das Formteil auf der Lagersitzfläche 4 im Bereich der Trennebene 16 eine Anrißkerbe 17 auf, die ein gezieltes Bruchtrennen ermöglicht. Wie insbesondere aus Fig. 4 ersichtlich, wird die Anrißkerbe 17 von der Lagerschicht 15 vollständig überdeckt.

Bei dem in der Zeichnung dargestellten Ausführungsbeispiel handelt es sich um ein Formteil, das mittels Sinterschmieden hergestellt worden ist. Der Grünling wurde vor dem Sintern mit einer Kerbe versehen, die während des anschließenden Schmiedens nahezu vollständig verschlossen wird. Dieser Zustand ist insbesondere in Fig. 4 deutlich dargestellt. Diese Anrißkerbe 17 reicht aus, um ein definiertes Bruchtrennen sowohl der Pleuelkappe 18 von dem restlichen Pleuel 5 als auch der Lagerschicht 15 an der gewünschten Stelle zu bewirken.

In Fig. 3 ist eine Pleuelkappe 18 nach dem Bruchtrennen dargestellt. Bei dem in der Zeichnung dargestellten Ausführungsbeispiel ist die Pleuelklappe 18 mit dem darauf aufgebrachten Teil 21 der Lagerschicht 15 von dem restlichen Pleuel 5 durch Bruchtrennung abgetrennt worden. Die durch die Bruchtrennung erzeugte Oberfläche der Trennstelle 19 zwischen Pleuelkappe 18 und restlichem Pleuel 5 und der Trennstelle 23 zwischen den korrespondierenden Lagerschichten 15, 21 weisen eine große und unregelmäßige Oberfläche auf, so daß diese Pleuelkappe 18 nur auf das korrespondierende restliche Pleuel 5 paßt. Ein seitlicher Versatz der Pleuelkappe 18 auf dem restlichen Pleuel 5 ist somit nahezu ausgeschlossen. Die Pleuelkappe 18 wird mittels nicht dargestellter Pleuelschrauben mit dem restlichen Pleuel 5 verbunden.

Je nach Ausbildung und Material der Lagerschicht kann es zweckmäßig sein, auch deren innere Oberfläche mit einer Anrißkerbe, z. B. durch mechanische Bearbeitung, zu versehen. Die Anrißkerbe kann dabei so bemessen sein, daß bei der anschließenden Bearbeitung der Lauffläche, z. B. durch Feindrehen oder Honen, die Anrißkerbe entfernt wird.

Das kleine Pleuelauge 2 weist eine Laufbuchse 14 auf, die in üblicher Weise in das kleine Pleuelauge eingepreßt worden ist. Je nach Abmessung des kleinen Pleuelauges 2 kann auch vorgesehen werden, daß die Lagersitzfläche 11 des kleinen Pleuelauges 2 ebenfalls mit einem thermischen Spritzverfahren mit dem Lagerwerkstoff beschichtet wird.

## Patentansprüche

1. Verfahren zum Herstellen eines Bauteils aus einem Formteil, wobei das Bauteil zumindest einen durch einen Lagerdeckel (18) gebildeten geteilten Lagersitz (24) aufweist, bei welchem Verfahren der Lagerdeckel von dem Formteil abgetrennt wird, dadurch **gekennzeichnet,** daß eine Lagerschicht (15) aus einem anderen Material als dem des Formteils auf eine Lagersitzfläche (4) des Formteils aufgebracht wird und daß zumindest die Lagerschicht (15) durch Bruchtrennung geteilt wird.

2. Verfahren nach Anspruch 1, dadurch gekennzeichnet, daß vor der Beschichtung des Formteils der Lagerdeckel (18) von dem Formteil abgetrennt und lösbar mit diesem zusammengesetzt wird.

3. Verfahren nach Anspruch 1 oder 2, dadurch gekennzeichnet, daß die Abtrennung des Lagerdeckels (18) durch Bruchtrennung erfolgt.

4. Verfahren nach Anspruch 1, dadurch gekennzeichnet, daß der Lagerdeckel (18) nach der Beschichtung des Formteils zusammen mit dem auf der Sitzfläche (20) des Lagerdeckels aufgebrachten Teil (21) der Lagerschicht (15) durch Bruchtrennung von dem Formteil abgetrennt wird.

5. Verfahren nach einem der Ansprüche 1 bis 4, dadurch gekennzeichnet, daß das Formteil auf der Lagersitzfläche (4) im Bereich der Trennstelle (19) mit wenigstens einer Anrißkerbe (17) versehen wird.

6. Verfahren nach einem der Ansprüche 1 bis 6, dadurch gekennzeichnet, daß vor der Bruchtrennung das Formteil zumindest im Bereich der Trennstelle (19) durch gezielte Wärmebehandlung versprödet wird.

7. Verfahren nach einem der Ansprüche 1 bis 6, dadurch gekennzeichnet, daß vor der Bruchtrennung das Formteil zumindest im Bereich der Trennstelle (19) gekühlt wird.

8. Verfahren nach einem der Ansprüche 1 bis 7, dadurch gekennzeichnet, daß vor der Bruchtrennung die Lagerschicht (15) zumindest im Bereich der Trennstelle (23) durch gezielte Wärmebehandlung versprödet wird.

9. Verfahren nach einem der Ansprüche 1 bis 8, dadurch gekennzeichnet, daß vor der Bruchtrennung die Lagerschicht (15) zumindest im Bereich der Trennstelle (23) gekühlt wird.

10. Verfahren nach einem der Ansprüche 1 bis 9, dadurch gekennzeichnet, daß die spanende Nachbearbeitung der Lagerfläche (13) der Lagerschicht (15) nach dem Abtrennen des Lagerdeckels (18) und dem Bruchtrennen der Lagerschicht (15) im zusammengesetzten Zustand des Bauteils erfolgt.

11. Verfahren nach einem der Ansprüche 1 bis 10, dadurch gekennzeichnet, daß die Lagerschicht (15) durch ein thermisches Spritzverfahren, insbesondere durch Flammspritzen, Hochgeschwindigkeitsflammspritzen oder Plasmaspritzen, auf die Lagersitzfläche (4) aufgebracht wird.

12. Verfahren nach einem der Ansprüche 1 bis 11, dadurch gekennzeichnet, daß das Formteil durch Gießen oder Schmieden oder pulvermetallurgische Verfahren, insbesondere Sintern oder Sinterschmieden, hergestellt wird.

13. Verfahren nach einem der Ansprüche 1 bis 12, dadurch gekennzeichnet, daß die Lagerschicht (15) als Gleitlagerschicht ausgebildet wird.

14. Verfahren nach einem der Ansprüche 1 bis 13, dadurch gekennzeichnet, daß als Bauteil ein Pleuel (1) mit einem geteilten Pleuelkopf (3) hergestellt wird.

15. Bauteil das aus einem Formteil hergestellt ist, mit einem Grundkörper und einem durch einen Lagerdeckel (18) gebildeten, geteilten Lagersitz, dadurch gekennzeichnet, daß die Lagersitzfläche (4) des Grundkörpers mit einer Lagerschicht (15) aus einem anderen Material als dem des Formteils versehen ist und daß die Trennstelle des geteilten Lagersitzes zumindest im Bereich der Lagerschicht (15) eine durch Bruchtrennung erzeugte Trennstelle (23) aufweist.

16. Bauteil nach Anspruch 15, dadurch gekennzeichnet, daß die Trennstelle des geteilten Lagersitzes auch im Bereich der Trennfläche zwischen Lagerdeckel (18) und Grundkörper eine durch Bruchtrennung erzeugte Trennstelle (19) aufweist.

17. Bauteil nach Anspruch 15 oder 16, dadurch gekennzeichnet, daß das Bauteil als Pleuel (1) mit einem geteilten Pleuelkopf (3) ausgebildet ist.

## Claims

1. A method for the production of a component from a shaped part, the component having at least one divided bearing seat (4) formed by a bearing cap (18), in which method the bearing cap is separated from the shaped part, characterised in that a bearing layer (15) made of a material other than that of the shaped part is applied to a bearing seat surface (4) of the shaped part, and that at least the bearing layer (15) is separated by fracture separation.

2. A method according to Claim 1, characterised in that before the coating of the shaped part the bearing cap (18) is separated from the shaped part and is assembled detachably therewith.

3. A method according to Claim 1 or 2, characterised in that the separation of the bearing cap (18) is effected by fracture separation.

4. A method according to Claim 1, characterised in that the bearing cap (18) after the coating of the shaped part together with the part (21) of the bearing layer (15) applied to the seat surface (20) of the bearing cap is separated from the shaped part by fracture separation.

5. A method according to one of Claims 1 to 4, characterised in that the shaped part is provided on the bearing seat surface (4) in the region of the point of separation (19) with at least one initial crack notch (17).

6. A method according to one of Claims 1 to 6, characterised in that before the fracture separation the shaped part is embrittled at least in the region of the point of separation (19) by selective heat treatment.

7. A method according to one of Claims 1 to 6, characterised in that before the fracture separation the shaped part is cooled at least in the region of the point of separation (19).

8. A method according to one of Claims 1 to 7, characterised in that before the fracture separation the bearing layer (15) is embrittled at least in the region of the point of separation (23) by selective heat treatment.

9. A method according to one of Claims 1 to 8, characterised in that before the fracture separation the bearing layer (15) is cooled at least in the region of the point of separation (23).

10. A method according to one of Claims 1 to 9, characterised in that the cutting finishing of the bearing surface (13) of the bearing layer (15) after the separation of the bearing cap (18) and the fracture separation of the bearing layer (15) is effected in the assembled state of the component.

11. A method according to one of Claims 1 to 10, characterised in that the bearing layer (15) is applied to the bearing seat surface (4) by a thermal spraying operation, in particular by flame spraying, high-speed flame spraying or plasma spraying.

12. A method according to one of Claims 1 to 11, characterised in that the shaped part is produced by casting or forging or powder-metallurgical processes, in particular sintering or sinter-forging.

13. A method according to one of Claims 1 to 12, characterised in that the bearing layer (15) is formed as a sliding bearing layer.

14. A method according to one of Claims 1 to 13, characterised in that a connecting-rod (1) having a divided connecting-rod head (3) is produced as the component.

15. A component which is made from a shaped part, comprising a basic body and a divided bearing seat formed by a bearing cap (18), characterised in that the bearing seat surface (4) of the basic body is provided with a bearing layer (15) made of a material other than that of the shaped part, and that the point of separation of the divided bearing seat at least in the region of the bearing layer (15) has a point of separation (23) produced by fracture separation.

16. A component according to Claim 15, characterised in that the point of separation of the divided bearing seat also has a point of separation (19) produced by fracture separation in the region of the parting plane between the bearing cap (18) and the basic body.

17. A component according to Claim 15 or 16, characterised in that the component is designed as a connecting-rod (1) having a divided connecting-rod head (3).

## Revendications

1. Procédé pour fabriquer une pièce à partir d'une pièce préformée, la pièce comportant au moins un siège de palier (4) en deux parties formé par un chapeau de palier (18), procédé dans lequel le chapeau de palier est séparé de la pièce préformée, caractérisé par le fait qu'une couche de palier (15) en un matériau autre que celui de la pièce préformée est mise en place sur une surface de siège de palier (4) de la pièce préformée et qu'au moins la couche de palier (15) est séparée par rupture.

2. Procédé selon la revendication 1, caractérisé par le fait qu'avant le revêtement de la pièce préformée, le chapeau de palier (18) est séparé de la pièce préformée et est assemblé de manière démontable à celle-i.

3. Procédé selon la revendication 1 ou 2, caractérisé par le fait que la séparation du chapeau de palier (18) est produite par rupture.

4. Procédé selon la revendication 1, caractérisé par le fait que le chapeau de palier (18) est séparé par rupture de la pièce préformée après le revêtement de la pièce préformée, conjointement à la partie (21) de la couche de palier (15) mise en place sur la surface de siège (20) du chapeau de palier.

5. Procédé selon l'une des revendications 1 à 4, caractérisé par le fait que la pièce préformée est munie sur la surface de siège de palier (4) dans la région de l'emplacement de séparation (19) d'au moins une encoche d'amorce de rupture (17).

6. Procédé selon l'une des revendications 1 à 5, caractérisé par le fait qu'avant la séparation par rupture la pièce préformée est fragilisée au moins dans la région de l'emplacement de séparation (19) par un traitement thermique dans ce but.

7. Procédé selon l'une des revendications 1 à 6, caractérisé par le fait qu'avant la séparation par rupture la pièce préformée est refroidie au moins dans la région de l'emplacement de séparation (19).

8. Procédé selon l'une des revendications 1 à 7, caractérisé par le fait qu'avant la séparation par rupture, la couche de palier (15) est fragilisée au moins dans la région de l'emplacement de séparation (23) par un traitement thermique dans ce but.

9. Procédé selon l'une des revendications 1 à 8, caractérisé par le fait qu'avant la séparation par rupture, la couche de palier (15) est refroidie au moins dans la région de l'emplacement de séparation (23).

10. Procédé selon l'une des revendications 1 à 9, caractérisé par le fait que l'usinage de reprise avec enlèvement de copeaux de la surface de palier (13) de la couche de palier (15) a lieu après la séparation du chapeau de palier (18) et la séparation par rupture de la couche de palier (15), dans l'état assemblé de la pièce.

11. Procédé selon l'une des revendications 1 à 10, caractérisé par le fait que la couche de palier (15) est mise en place par un procédé de projection thermique, en particulier par projection à la flamme, projection à la flamme à haute vitesse ou projection au plasma, sur la surface de siège de palier (4).

12. Procédé selon l'une des revendications 1 à 11, caractérisé par le fait que la pièce préformée est fabriquée par coulée ou forgeage ou procédé de métallurgie des poudres, en particulier frittage ou frittage-forgeage.

13. Procédé selon l'une des revendications 1 à 12, caractérisé par le fait que la couche de palier (15) est réalisée en tant que couche de palier lisse.

14. Procédé selon l'une des revendications 1 à 13, caractérisé par le fait qu'une bielle (1) avec une tête de bielle (3) en deux parties est fabriquée en tant que pièce.

15. Pièce, qui est fabriquée à partir d'une pièce préformée, comportant un corps de base et un siège de palier en deux parties, formé par un chapeau de palier (18), caractérisée par le fait que la surface de siège de palier (4) du corps de base est munie d'une couche de palier (15) en une matière autre que celle de la pièce préformée, et que l'emplacement de séparation du siège de palier en deux parties comporte au moins dans la région de la couche de palier (15) un emplacement de séparation (23) obtenu par une séparation par rupture.

16. Pièce selon la revendication 15, caractérisée par le fait que l'emplacement de séparation du siège de palier en deux parties comporte également dans la région de la surface de séparation entre le chapeau de palier (18) et le corps de base un emplacement de séparation (19) produit par rupture.

17. Pièce selon la revendication 15 ou 16, caractérisée par le fait que la pièce est réalisée en tant que bielle (1) avec une tête de bielle (3) en deux parties.
